(19) Europäisches Patentamt / European Patent Office / Office européen des brevets

(11) **EP 3 345 264 B1**

(12) **FASCICULE DE BREVET EUROPEEN**

(45) Date de publication et mention de la délivrance du brevet:
**23.09.2020 Bulletin 2020/39**

(51) Int Cl.:
***H01S 3/00*** *(2006.01)* ***G01J 11/00*** *(2006.01)*

(21) Numéro de dépôt: **16775776.4**

(86) Numéro de dépôt international:
**PCT/FR2016/052191**

(22) Date de dépôt: **05.09.2016**

(87) Numéro de publication internationale:
**WO 2017/037402 (09.03.2017 Gazette 2017/10)**

(54) **SYSTÈME DE MESURE DE DURÉE, DE PROFIL TEMPOREL ET DE SPECTRE D'IMPULSION LASER ULTRABRÈVE**

SYSTEM ZUR MESSUNG DER DAUER, DES ZEITLICHEN PROFILS UND SPEKTRUMS EINES ULTRASCHNELLEN LASERPULSES

SYSTEM FOR MEASURING THE DURATION, TIME PROFILE AND SPECTRUM OF AN ULTRA-FAST LASER PULSE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.09.2015 FR 1558223**

(43) Date de publication de la demande:
**11.07.2018 Bulletin 2018/28**

(73) Titulaires:
• **Université de Bordeaux**
  **33000 Bordeaux (FR)**
• **Centre National de la Recherche Scientifique (CNRS)**
  **75016 Paris (FR)**

(72) Inventeur: **DUBROUIL, Antoine**
  **33400 Talence (FR)**

(74) Mandataire: **Jacobacci Coralis Harle**
  **32, rue de l'Arcade**
  **75008 Paris (FR)**

(56) Documents cités:
**WO-A1-2010/089511     US-A1- 2002 180 977**

• **XUN GU ET AL: "The Measurement of Ultrashort Light Pulses-Simple Devices, Complex Pulses", OPTICAL REVIEW, SPRINGER, BERLIN, DE, vol. 11, no. 3, 1 mai 2004 (2004-05-01), pages 141-152, XP019353196, ISSN: 1349-9432, DOI: 10.1007/S10-043-0041-8**

**EP 3 345 264 B1**

## Description

DOMAINE TECHNIQUE AUQUEL SE RAPPORTE L'INVENTION

La présente invention concerne de manière générale le domaine des systèmes et méthodes de mesure d'impulsions laser ultrabrèves, en particulier, pour la mesure de durée, pour la mesure du spectre des impulsions ou pour la reconstruction complète du profil temporel en intensité et en phase.

Dans le présent document, on entend par impulsion laser ultrabrève une impulsion ayant une durée de l'ordre de la picoseconde à la femtoseconde. Ces impulsions laser ultrabrèves s'étendent généralement sur une large bande spectrale, de quelques nanomètres pour les impulsions picosecondes à quelques dizaines voire centaines de nanomètres pour les impulsions femtosecondes. La bande spectrale peut se situer dans le domaine de l'ultraviolet, du visible et/ou de l'infrarouge.

L'invention concerne plus particulièrement un système et un procédé de mesure de la durée ou du profil temporel d'une impulsion laser ultrabrève et éventuellement du spectre et/ou de la phase d'impulsions laser ultrabrève.

ARRIERE-PLAN TECHNOLOGIQUE

Différentes technologies et différents systèmes de mesure d'impulsions lumineuses sont déjà connus. Ces systèmes se classent principalement en deux grandes catégories : les autocorrélateurs et les systèmes de mesure de phase.

Les autocorrélateurs permettent de mesurer la durée des impulsions en faisant une hypothèse sur la forme de leur profil temporel. Il existe des autocorrélateurs multicoups et des autocorrélateurs monocoup. On s'intéresse ici plus particulièrement aux autocorrélateurs monocoup.

Un autocorrélateur optique monocoup d'ordre deux en intensité comporte généralement un diviseur de faisceau pour former deux répliques du faisceau d'impulsions source à une fréquence fondamentale (ω), un cristal optique non-linéaire d'ordre deux (éventuellement d'ordre 3) dans lequel les deux répliques se croisent et un détecteur mesurant le profil d'intensité du faisceau de seconde harmonique (2ω) en fonction du retard entre les deux répliques. Un tel autocorrélateur optique intensimétrique mesure l'enveloppe du signal d'ordre deux. Combiné à un système de détection ayant une résolution interférométrique, on obtient un autocorrélateur optique monocoup interférométrique d'ordre deux.

US2002/0180977 A1 divulgue un appareil utilisant un autocorrélateur optique monocoup interférométrique.

Diels et al. (Control and measurement of amplitude of ultrashort pulse shapes -in amplitude and phase- with femtosecond accuracy Appl. Optics, Vol. 24, n° 9, p. 1270-1282, 1985) ont divulgué une méthode de calcul de la forme temporelle et de la phase d'impulsions à partir d'un enregistrement du spectre des impulsions, d'une mesure de la fonction d'autocorrélation en intensité et d'une mesure de la fonction d'autocorrélation interférométrique.

F. Salin et al. (Autocorrélation interférométrique monocoup d'impulsions femtosecondes, Revue Phys. Appl. 22, p. 1613-1618, 1987) ont proposé un autocorrélateur interférométrique monocoup comprenant un cristal non-linéaire doubleur de fréquence dans lequel se croisent deux faisceaux synchrones sous un angle d'incidence faible, un filtre UV pour filtrer les faisceaux doublés en fréquence et un détecteur multicanal. Le cristal de KDP forme trois faisceaux doublés en fréquence qui se recombinent de manière cohérente sur le détecteur pour former des franges d'interférences dont le contraste est modulé. L'analyse de ces franges d'interférences permet d'extraire la durée d'une impulsion monocoup.

Différents systèmes de mesure de phase (de type Spider, 2DSI, FROG, SRSI...) permettent de reconstruire le profil temporel en intensité et en phase des impulsions et fournissent une caractérisation temporelle complète. Cependant, les systèmes de mesure de phase sont plus complexes et plus difficiles à utiliser que les autocorrélateurs. Les dispositifs de type FROG utilisent un spectromètre pour résoudre spectralement la trace d'autocorrélation et produire ainsi un spectrogramme qui regroupe l'information spectrale pour chaque délai entre les deux répliques d'une impulsion. L'analyse du spectrogramme par un algorithme itératif permet ensuite d'extraire le profil temporel en intensité et la phase des impulsions. Dans le cas d'un dispositif grenouille, c'est l'accord de phase angulaire dans un cristal non-linéaire épais qui permet de produire le spectrogramme. Dans le cas des dispositifs Spider et SRSI, on mesure des interférences spectrales entre deux répliques de l'impulsion ayant subi des interactions différentes. Une analyse par transformée de Fourier permet ensuite d'extraire la phase de l'impulsion et ainsi de reconstruire le profil temporel en intensité grâce à la mesure préalable ou simultanée du spectre. Les interférences sont acquises en 2D dans le cas du 2DSI.

De manière générale, les systèmes de mesure d'impulsion laser nécessitent un alignement précis et une expertise spécifique pour produire des résultats fiables. La mesure de phase requiert en particulier des réglages très précis. Les autocorrélateurs fournissent une mesure de la durée des impulsions laser en faisant une hypothèse sur le profil temporel de ces impulsions laser. Néanmoins, l'utilisation d'un autocorrélateur est relativement moins complexe que celle d'un système de mesure de phase. Les autocorrélateurs sont donc extrêmement utiles pour optimiser la durée des impulsions en temps réel ou vérifier la stabilité dans le temps des performances d'un laser. Ces deux techniques sont complémentaires et un utilisateur de laser à impulsions ultrabrèves doit généralement acquérir deux dispositifs : un autocorrélateur et un système de mesure de phase.

Néanmoins, quel que soit le dispositif, il faut une expertise spécifique pour l'utiliser et une phase de réglage précise est nécessaire. Cette phase de réglage peut être très chronophage. De plus, la qualité et l'exactitude des mesures dépendent de cette phase de réglage. Egalement, cette phase de mise au point interdit l'utilisation de ces dispositifs sous vide alors qu'un besoin d'effectuer ces mesures sous vide existe pour certaines applications.

OBJET DE L'INVENTION

Afin de remédier aux inconvénients précités de l'état de la technique, la présente invention propose un système de mesure de durée, de profil temporel et de spectre d'impulsion laser ultrabrève.

La présente invention est définie par le système constituant l'objet de la revendication 1. Des modes de réalisation préférés sont divulguées dans les revendications dépendantes.

Plus particulièrement, on propose selon l'invention un système de mesure de durée, de profil temporel et de spectre d'impulsion laser ultrabrève comportant un autocorrélateur optique monocoup comprenant un composant optique à division de front d'onde disposé pour recevoir un front d'onde collimaté de fréquence optique fondamentale (ω) provenant d'une source d'impulsion laser ultrabrève et pour diviser spatialement le front d'onde collimaté d'une impulsion lumineuse ultrabrève en un premier front d'onde divisé se propageant suivant une première direction et en un second front d'onde divisé se propageant suivant une seconde direction formant un angle non nul avec la première direction, le composant optique à division de front d'onde comportant un bi-prisme de Fresnel ou un bi-miroir de Fresnel, un cristal optique non linéaire, de préférence générateur de seconde harmonique, disposé à une distance déterminée du composant optique à division de front d'onde de manière à ce que le premier front d'onde divisé et le second front d'onde divisé se superposent dans le cristal optique non linéaire, un système optique formant une image du cristal optique non-linéaire sur un système de détection résolu spatialement suivant au moins une direction, un dispositif de filtrage disposé entre le cristal optique non linéaire et le système de détection, le dispositif de filtrage et le système de détection étant configurés pour détecter simultanément, d'une part, une trace d'autocorrélation interférométrique ou intensimétrique monocoup d'ordre deux à la fréquence optique double (2ω) et, d'autre part, au moins une autre trace d'autocorrélation monocoup de type interférométrique d'ordre un à la fréquence optique fondamentale (ω) de et un système de traitement du signal configuré pour analyser , d'une part, la trace d'autocorrélation interférométrique ou intensimétrique monocoup d'ordre deux à la fréquence optique double (2ω), et, d'autre part, l'autre trace d'autocorrélation monocoup de type interférométrique d'ordre un à la fréquence optique fondamentale (ω), et pour en déduire une mesure de durée, de profil temporel et de spectre d'impulsion laser ultrabrève. Le mesure de spectre fondamental de l'impulsion peut être effectuée indirectement grâce au traitement de la trace d'autocorrélation d'ordre 1. En effet en appliquant le théorème général de Wiener-Khinchine au cas des ondes électromagnétiques, on constate que la densité spectrale de puissance et donc le spectre fondamental de l'impulsion est donné par la transformée de Fourier de l'autocorrélation d'ordre 1. La mesure du spectre fondamental et/ou du spectre doublé de l'impulsion peuvent également être faites au moyen d'un spectromètre.

D'autres caractéristiques non limitatives et avantageuses du système de mesure de durée et de profil temporel d'impulsion laser ultrabrève conforme à l'invention, prises individuellement ou selon toutes les combinaisons techniquement possibles, sont les suivantes :

- le bi-prisme de Fresnel ou le bi-miroir de Fresnel présente un angle ajustable en fonction de la durée de l'impulsion laser ultrabrève à mesurer,
- la distance **D** entre le composant optique à division de front d'onde et le cristal optique non-linéaire est comprise entre: 0.1\*delta et 0.5\*delta où delta est égal à $\dfrac{\emptyset}{2\times\tan(\alpha/2)}$, et où Φ est le diamètre d'entrée du dispositif adapté à recevoir un faisceau de diamètre supérieur ou égal à 3 mm, et α l'angle entre les deux faisceaux (α est égal à $(180 - A)\cdot(n-1)$ en degré où A est l'apex du biprisme et n l'indice de réfraction du matériau du prisme ou, respectivement, α est égal à $2\*(180-A)$ pour un bi-miroir de Fresnel, où A représente l'apex d'un bi-prisme complémentaire au bi-miroir), afin que l'effet de la diffraction soit négligeable par rapport au signal qu'on veut mesure ;

- le système peut comporter une pluralité de bi-prismes de Fresnel ayant chacun un angle au sommet déterminé et comprenant en outre un système de commutation adapté pour sélectionner un bi-prisme de Fresnel parmi la pluralité de bi-prismes de Fresnel et pour disposer le bi-prisme sélectionné à une distance D du cristal optique non linéaire telle que définie ci-dessus ;
- le cristal optique non linéaire a une épaisseur comprise entre 5 μm, pour une impulsion femtoseconde et quelques millimètres pour une impulsion picoseconde, et de préférence entre 5 microns et 50 microns, et un accord de phase adaptés pour permettre un doublage de fréquence optique en fonction de la largeur spectrale de l'impulsion ;
- le cristal optique non-linéaire générateur de seconde harmonique a une bande spectrale d'entrée pour le doublage de fréquence qui s'étend de 410 nm à 3,5 microns, par exemple pour un cristal de BBO ultrafin, ou de 2,5 à 12 microns pour un cristal d' AgGaSe$_2$ ;

- le détecteur comprend une barrette de photodiodes, une barrette de CCD, une barrette CMOS ou une caméra CCD ou CMOS ayant une résolution spatiale micrométrique suivant une ou deux dimensions ;
- le dispositif de filtrage comporte un filtre spatial commutable en ouverture entre une première et une seconde ouverture, la première ouverture étant configurée pour faire passer vers le système de détection d'une part la direction de propagation de la bissectrice de la première et de la seconde directions et d'autre part la première direction et/ou la seconde direction, de manière à former la trace d'autocorrélation interférométrique monocoup d'ordre deux, et respectivement la seconde ouverture étant configurée pour faire passer vers le système de détection sélectivement l'axe de propagation suivant la bissectrice de la première et de la seconde directions tout en bloquant les première et seconde directions pour former l'autre trace d'autocorrélation monocoup de type intensimétrique d'ordre deux ;
- le dispositif de filtrage comporte un filtre spectral configuré pour filtrer sélectivement la fréquence optique double et pour bloquer la fréquence optique fondamentale ;
- le filtre spectral comprend un filtre de verre coloré ou un miroir dichroïque, un filtre multicouche ou est réalisé par séparation spatial des faisceaux;
- le système de détection comporte une caméra comprenant une première et une deuxième zones de détection résolues spatialement et le dispositif de filtrage comporte un filtre spectral ayant une première et une deuxième zones de filtrage spectral, la première zone de filtrage spectral étant configurée pour faire passer sélectivement la fréquence optique double vers la première zone de détection tout en bloquant la fréquence optique fondamentale, et la deuxième zone de filtrage spectral étant configurée pour faire passer sélectivement la fréquence optique fondamentale vers la deuxième zone de détection tout en bloquant la fréquence optique double ;
- le système de détection comporte une caméra comprenant une première et une deuxième régions de détection résolues spatialement et dans lequel le dispositif de filtrage comporte un filtre spatial ayant au moins une première zone de filtrage spatial et une deuxième zone de filtrage spatial, la première zone de filtrage spatial étant configurée pour faire passer, d'une part, la direction de propagation de la bissectrice de la première et de la seconde directions et, d'autre part, la première et/ou la seconde direction, vers la première région de détection, de manière à former la trace d'autocorrélation interférométrique monocoup d'ordre deux, et respectivement la deuxième zone de filtrage spatial étant configurée pour faire passer sélectivement la direction de propagation suivant la bissectrice de la première et de la seconde directions tout en bloquant les première et seconde directions vers la deuxième région de détection, pour former l'autre trace d'autocorrélation monocoup de type intensimétrique d'ordre deux.

Dans un mode de réalisation particulier, le système comprend en outre un spectromètre configuré pour enregistrer le spectre à 2ω de l'impulsion lumineuse et éventuellement le spectre fondamental (ω), et dans lequel le système de traitement du signal est configuré pour en déduire une mesure de la phase de l'impulsion lumineuse.

Dans un autre mode de réalisation particulier, le système de détection comporte un spectromètre imageur ayant une fente d'entrée, un système optique spectralement dispersif et un détecteur résolu spatialement suivant deux directions, le dispositif de filtrage (21, 23, 24) et le spectromètre imageur étant configurés pour détecter, d'une part, une trace d'autocorrélation intensimétrique monocoup d'ordre deux résolue spectralement et, d'autre part, une trace d'autocorrélation interférométrique monocoup résolue spectralement ;

- le système optique spectralement dispersif comprend un réseau de diffraction en transmission ou en réflexion ;
- le système optique formant l'image du cristal optique non-linéaire sur la fente d'entrée du spectromètre imageur comporte un système optique achromatique comprenant un premier miroir sphérique éclairé sous un angle d'incidence inférieur à 4° degrés, et un second miroir configuré pour séparer un faisceau optique réfléchi d'un faisceau optique incident sur le premier miroir sphérique ;
- le spectromètre imageur comporte un autre système optique achromatique à miroirs configuré pour former une image de la fente d'entrée sur le détecteur, l'autre système optique achromatique à miroirs comprenant un miroir sphérique éclairé sous un angle d'incidence inférieur à 3° degrés, et un autre miroir configuré pour séparer un faisceau optique réfléchi d'un faisceau optique incident sur ledit miroir sphérique ;
- le système comporte en outre un diaphragme d'alignement optique adjacent au composant optique à division de front d'onde, le diaphragme d'alignement étant positionné à la verticale du premier pied du dispositif formant ainsi un point de pivot pour l'alignement du dispositif sur l'axe optique. Cette configuration opto-mécanique permet d'aligner directement le dispositif sur le faisceau laser contrairement à l'état de l'art où c'est le faisceau laser qui est aligné dans le dispositif au moyen deux miroirs d'injection et non le dispositif qui permet l'alignement.

DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 représente schématiquement un système de mesure de la durée d'une impulsion laser basé sur un autocorrélateur intensimétrique ou interférométrique selon un premier mode de réalisation ;
- la figure 2 représente schématiquement une variante du premier mode de réalisation ;
- la figure 3 représente schématiquement un système de mesure de la durée et la phase d'une impulsion laser basé sur un autocorrélateur combiné à un spectromètre imageur selon un deuxième mode de réalisation ;
- la figure 4 représente schématiquement une première variante du deuxième mode de réalisation ;
- la figure 5 représente schématiquement une deuxième variante du deuxième mode de réalisation ;
- la figure 6 représente schématiquement un mode de réalisation particulier d'un dispositif de filtrage spectral et spatial ;
- la figure 7 représente schématiquement une variante d'un dispositif de filtrage spectral ;
- la figure 8 représente schématiquement un mode de réalisation particulier comportant un spectromètre combiné à un autocorrélateur optique monocoup avec une autre variante de dispositif de filtrage spectral et spatial.

Dispositif

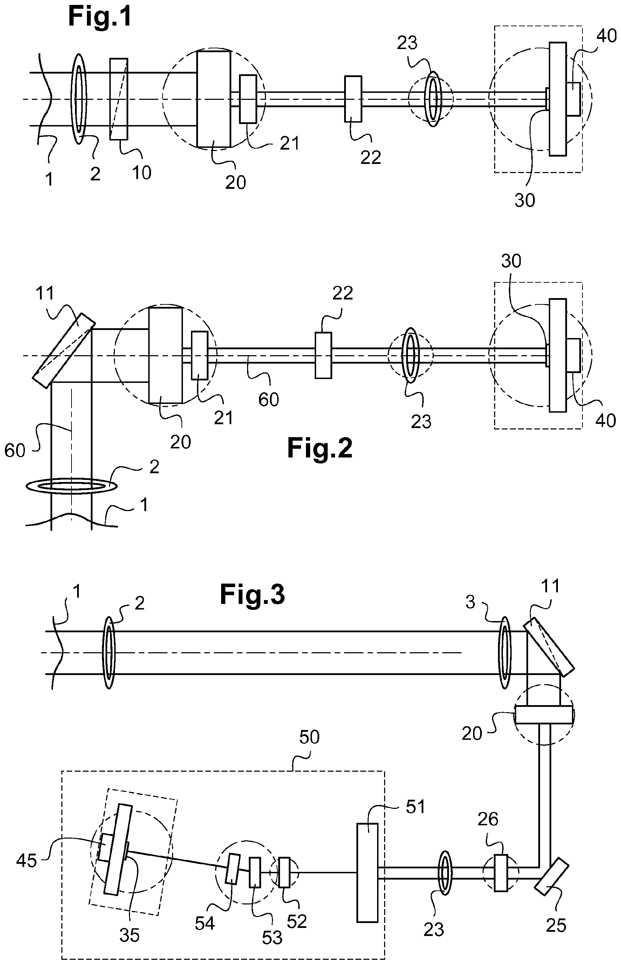

Sur la figure 1, on a représenté un système de mesure de la durée ou du profil temporel d'une impulsion laser, basé sur un autocorrélateur intensimétrique ou interférométrique. Ce système comporte un premier iris 2, un bi-prisme de Fresnel 10, un cristal optique non-linéaire 20 générateur de seconde harmonique, un filtre spectral 21, une lentille 22, un deuxième iris de sélection 23, un détecteur 30 et un connecteur 40 relié à un système de traitement du signal. Avantageusement, les composants du système de la figure 1 sont montés en ligne dans un boitier, ce qui permet un alignement aisé du système sur l'axe optique longitudinal 60 du faisceau de la source d'impulsion lumineuse ultrabrève.

On considère une impulsion laser ultrabrève formant un faisceau incident collimaté. L'impulsion laser ultrabrève présente un front d'onde 1. L'impulsion laser ultrabrève a un spectre qui est étendu (non monochromatique) et comprend notamment une fréquence optique fondamentale ω. Généralement, le spectre de l'impulsion laser ultrabrève est défini par une fréquence centrale et une largeur spectrale variable en fonction de la durée picoseconde à femtoseconde de l'impulsion.

Le premier iris 2 définit un premier repère d'alignement de l'axe optique pour centrer le faisceau incident sur le bi-prisme de Fresnel 10 et permet de limiter l'étendue spatiale du faisceau. Le bi-prisme de Fresnel est un composant optique monobloc utilisé de manière conventionnelle dans les interféromètres à division de front d'onde.

De façon particulièrement avantageuse, le système comporte un premier pied ajustable en hauteur disposé dans le plan du premier iris 2 et un deuxième pied ajustable en hauteur disposé dans un plan au voisinage du plan du détecteur 30. Le biprisme 10 est placé au plus près du premier iris 2. Ainsi le centrage du faisceau incident sur le premier iris assure le centrage sur le biprisme. Le premier pied constitue un point de pivot au niveau du premier iris 2, qui forme un repère d'alignement. Ainsi il est possible d'aligner le deuxième iris 23 par rapport au faisceau lumineux, sans affecter l'alignement par rapport au premier iris 2. Le système de la figure 1 est ainsi aligné précisément, facilement et rapidement.

De façon avantageuse, le faisceau incident présente une distribution en intensité ayant une symétrie axiale par rapport à l'axe optique 60 de propagation du faisceau. Le bi-prisme 10 est disposé de manière à ce que la base du bi-prisme reçoive le faisceau incident. L'arête entre les deux prismes est disposée transversalement à l'axe optique de propagation du faisceau incident. Ainsi, chaque prisme formant le bi-prisme 10 reçoit une moitié du faisceau incident ou une moitié de l'impulsion lumineuse 1. Le bi-prisme 10 permet de diviser le front d'onde 1 du faisceau incident en deux fronts d'onde divisés spatialement, chaque front d'onde divisé étant dévié symétriquement par rapport à l'arête du bi-prisme. Ainsi, en sortie du bi-prisme, un premier front divisé se propage suivant une première direction inclinée d'un angle de déviation par rapport à l'axe optique du faisceau incident et un second faisceau divisé se propage suivant une seconde direction inclinée d'un angle de déviation symétrique par rapport à l'axe optique du faisceau incident. Autrement dit, la première direction et la seconde direction sont inclinées symétriquement par rapport à l'axe optique longitudinal 60. Les angles de déviation dépendent classiquement des angles et de l'indice de réfraction du bi-prisme 10. Le premier faisceau divisé et le second faisceau divisé se croisent dans une zone de recouvrement où se forment des interférences et en particulier dans le cristal doubleur de fréquence 20. Les faisceaux divisés sont aussi appelés les répliques du faisceau incident.

Un avantage lié à l'utilisation d'un bi-prisme de Fresnel ayant un angle faible, par exemple de l'ordre de 2.5 degrés (correspondant à un angle au sommet de 175 degrés) est d'augmenter l'interfrange du faisceau interférométrique d'autocorrélation, ce qui permet, comme détaillé plus loin, de résoudre spatialement cette interfrange sur le détecteur d'image 30.

Le bi-prisme 10 est spécialement conçu de manière à limiter les effets de la diffraction du faisceau sur l'arête médiane du bi-prisme. Le bi-prisme est en général symétrique par rapport à l'arête médiane. Le plus petit angle du bi-prisme est de préférence supérieur à 1 degré. Par exemple, le bi-prisme est en BK7, en silice fondue, en fluorure de calcium ou tout autre matériau transparent à la longueur d'onde d'intérêt. De préférence, la qualité optique de l'arrête du bi-prisme est contrôlée de manière à limiter la diffraction.

Un cristal optique non-linéaire 20 générateur de seconde harmonique est disposé à une distance prédéterminée du bi-prisme 10 transversalement à l'axe optique de propagation du faisceau incident de manière à ce que les interférences se produisent à l'intérieur du cristal optique non-linéaire 20. On sélectionne un cristal optique non-linéaire 20 très mince, ayant une épaisseur déterminée en fonction de la durée de l'impulsion, par exemple entre 5 micromètres et 500 micromètres pour une impulsion ultrabrève, et entre 500 micromètres et quelques millimètres pour une impulsion de durée comprise entre 500 fs et 10 ps. Dans un exemple le cristal optique non-linéaire 20 a une épaisseur de 10 microns. Le matériau du cristal optique non-linéaire 20 est choisi, en fonction de la longueur d'onde d'intérêt, parmi les matériaux connus tels que le BBO, le KDP, KTP, $LiIO_3$, BiBO, LBO, $AgGaS_2$, $AgGaSe_2$, $ZnGeP_2$, GaSe, $AgGaGeS_4$ ou KTA. Le cristal optique non linéaire 20 mince est de préférence fixé, par exemple par collage optique, sur un substrat, par exemple en verre de silice.

Le cristal optique non-linéaire 20 est configuré pour permettre un doublage de fréquence du faisceau fondamental. La faible épaisseur du cristal optique non-linéaire 20 permet d'effectuer un doublage optique de fréquence sur une très large bande spectrale correspondant à des impulsions lumineuses ultrabrèves pouvant atteindre des durées sub-5 femtosecondes. A titre d'exemple, un cristal optique non-linéaire mince de BBO permet de doubler en fréquence un faisceau incident ayant une fréquence fondamentale ω dans une très large bande spectrale, s'étendant de 410 nm à 3500 nm. D'autres cristaux peuvent être utilisés pour d'autres gammes spectrales.

Un autre effet technique de cette faible épaisseur est de limiter l'efficacité du doublage de fréquence, contrairement à ce qui est généralement recherché dans les autocorrélateurs de l'art antérieur, où on cherche généralement à maximiser l'efficacité du doublage de fréquence.

Un avantage lié à la faible épaisseur du cristal optique non-linéaire 20 est d'augmenter le seuil des dommages susceptibles d'être induits par une impulsion de forte puissance, par comparaison avec un cristal optique non-linéaire plus épais. Dans le cristal optique non-linéaire 20 de faible épaisseur est ainsi compatible avec des impulsions ayant une puissance s'étendant sur une gamme de quelques milliwatts à 1 ou quelques Watts. Cette caractéristique technique permet d'utiliser l'autocorrélateur avec un faisceau direct (sans atténuation préalable du type réflexion vitreuse ou beam sampler) dans la plupart des cas. Egalement, pour augmenter encore l'énergie incidente admissible par le dispositif, une roue de densité optique variable peut être installée dans le trajet du faisceau 2ω. La roue est placée avantageusement entre la lentille 22 et l'iris 23 proche du foyer de la lentille. Lorsque la roue est positionnée à 45 degrés du faisceau incident, la réflexion sur la roue peut être utilisée pour éclairer une mire d'alignement et ainsi produire un repère d'alignement visible de l'extérieur du dispositif. Grâce à la roue de densité optique variable et au cristal non-linéaire fin, on peut détecter sans dommage une impulsion laser et faire une mesure monocoup valide jusqu'à une intensité de plus de 5 mJ par impulsion à 25 fs avec un faisceau de 20 mm de diamètre. Autrement dit, le dispositif peut fonctionner jusqu'à des intensités de $10^{11}$ $W/cm^2$, ce qui bien supérieur à l'intensité habituelle maximale de l'ordre de quelques $10^8$ $W/cm^2$ pour faire des mesure de durée.

La zone d'interférence est très étendue. Par contre, la distance où on place le biprisme est beaucoup plus restreinte.

Plus précisément, la distance entre le cristal optique non-linéaire 20 et le bi-prisme est déterminée en fonction de l'angle de déviation du bi-prisme selon une formule de calcul géométrique classique.

Cette distance est comprise entre 0.1*delta et 0.5*delta, où delta est égal à $Ø/(2×\tan(α/2))$, et Ø représente le diamètre d'entrée du dispositif, α étant l'angle entre la première et la seconde direction des faisceaux divisés. α est égal à (180 - A)·(n-1) en degrés, où A représente l'angle au sommet ou apex du biprisme et n l'indice de réfraction du matériau du prisme, en général n~1.5. De manière alternative, la distance entre le cristal optique non-linéaire 20 et le bi-prisme peut être déterminée expérimentalement. On sélectionne le diamètre Ø en fonction de l'angle du bi-prisme : Ø est supérieur à 2 mm pour un biprisme ayant un angle important, de l'ordre de 150 degrés d'apex et Φ est supérieur à 4- 5 mm pour un biprisme ayant un angle faible, de l'ordre de 175 degrés d'apex .

En sortie du cristal optique non-linéaire 20, on obtient une trace d'autocorrélation de l'impulsion lumineuse incidente doublée en fréquence, aussi appelé trace d'autocorrélation d'ordre deux ayant une fréquence optique 2ω. La trace d'autocorrélation interférométrique d'ordre deux se propage sur la bissectrice de la première direction et la seconde direction des faisceaux divisés.

Un filtre spectral 21 est disposé entre le cristal optique non-linéaire 20 et la caméra 30. Ce filtre spectral 21 permet de filtrer les deux répliques du faisceau fondamental et de ne recevoir que les faisceaux doublés sur le détecteur.

Un système optique, par exemple à lentille 22, forme l'image du cristal optique non-linéaire 20 sur un détecteur d'image 30 résolu spatialement. Le système optique de focal f est de préférence en conjugaison optique 2f-2f avec un grandissement de 1 pour des raisons de compacité, néanmoins d'autres grandissements supérieurs à 1 peuvent être utilisés pour améliorer la résolution. Si on souhaite un grandissement très élevé, il devient en général nécessaire de replier le faisceau au moins une fois pour rendre le système plus compact.

Un deuxième iris 23 permet de filtrer spatialement la trace d'autocorrélation se propageant suivant l'axe de propagation de l'impulsion lumineuse incidente. De préférence, le deuxième iris 23 est placé au voisinage du foyer de la lentille 22. Dans une première configuration, le deuxième iris 23 est ouvert, de manière à laisser passer, d'une part, le faisceau d'autocorrélation se propageant suivant la bissectrice de la première et de la seconde direction, et, d'autre part, au moins un des faisceaux déviés se propageant suivant la première et/ou la seconde direction, ces faisceaux déviés pouvant être à la fréquence optique $\omega$ et $2\omega$. Dans une seconde configuration, le deuxième iris 23 est fermé partiellement de manière à bloquer les faisceaux déviés par le bi-prisme qui se propageant suivant la première et la seconde direction, tout en laissant passer le faisceau d'autocorrélation se propageant suivant la bissectrice de la première et de la seconde.

Lorsque l'iris 23 ne laisse passer que le faisceau central correspondant à la trace d'autocorrélation, on détecte une trace d'autocorrélation intensimétrique. Ainsi, le détecteur d'image ne reçoit que la trace d'autocorrélation d'ordre 2 se propageant le long de l'axe optique longitudinal 60. Dans ce cas, on obtient une trace d'autocorrélation intensimétrique d'ordre 2.

Dans le cas où le deuxième iris 23 laisse passer le faisceau central et au moins un des deux faisceaux latéraux (qui sont constitués de fréquences $\omega$ et $2\omega$ ou seulement $2\omega$ si on filtre la fréquence fondamentale $\omega$), on obtient une trace d'autocorrélation interférométrique. L'utilisation de seulement deux faisceaux permet d'être moins sensible à l'alignement.

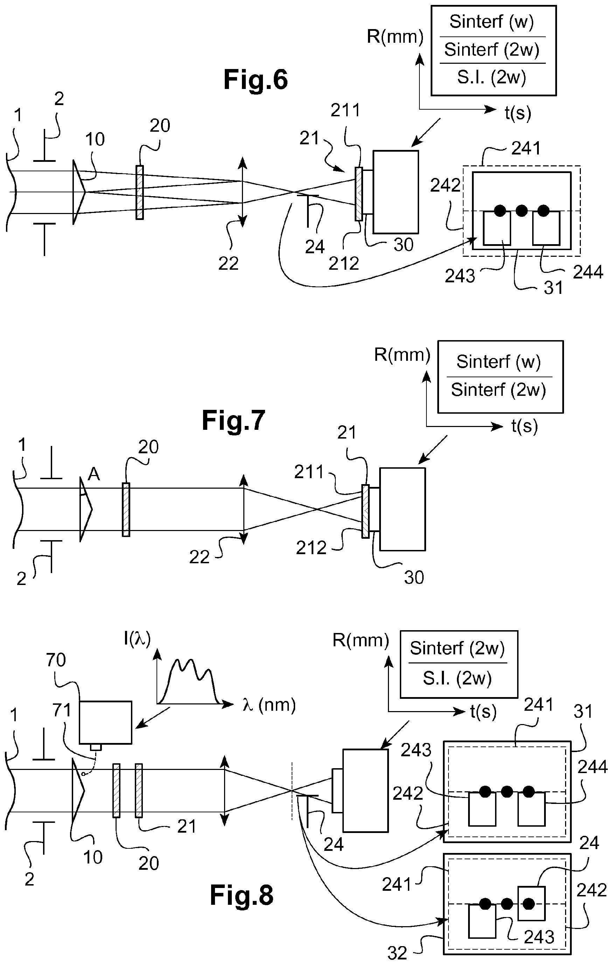

En modifiant simplement l'ouverture de l'iris 23, on effectue ainsi séquentiellement une mesure de trace d'autocorrélation monocoup en mode interférométrique et une mesure de trace d'autocorrélation monocoup en mode intensimétrique. Néanmoins dans les modes de réalisation des figures 6 et 8 les mesures intensimétriques et interférométriques peuvent être réalisées simultanément.

En mode interférométrique, la dimension de l'interfrange sur le détecteur 30 dépend de l'angle entre les faisceaux et de la longueur d'onde et du grandissement. Le détecteur d'image 30 est résolu spatialement suivant au moins une direction transverse à l'image interférométrique. La combinaison optique du système optique 22 et du détecteur d'image 30 est configurée pour fournir une résolution spatiale adaptée pour résoudre les franges de l'image du faisceau interférométrique d'autocorrélation sur le détecteur d'image 30. Pour un grandissement de 1, un angle entre les faisceaux de 2.5 degrés et une longueur d'onde de 400 nm, l'interfrange vaut environ 15 microns, soit à peu près 3 pixels pour une caméra ayant une taille de pixel de 5 microns. Le détecteur d'image 30 présente une sensibilité sur une large bande spectrale.

Dans un exemple de réalisation, le détecteur d'image 30 est une caméra résolue spatialement suivant deux directions (X, Y) transverses à l'axe optique longitudinal 60. La caméra est orientée de manière à ce que la direction X soit parallèle à l'arête du bi-prisme de Fresnel 10 et la direction Y perpendiculaire à l'arête du bi-prisme de Fresnel 10.

Le détecteur 30 fournit ainsi une mesure résolue spatialement suivant l'axe X représentative de la trace interférométrique d'autocorrélation d'ordre 2 ou de la trace d'autocorrélation interférométrique d'ordre un ou d'ordre deux selon le filtrage spatial et/ou spectral appliqué.

La figure 2 illustre une variante du premier mode de réalisation. Les mêmes éléments sont indiqués sur la figure 2 par les mêmes signes de référence que sur la figure 1. Dans cette variante, le bi-prisme de Fresnel 10 de la figure 1 est remplacé par un bi-miroir de Fresnel 11. L'arête du bi-miroir de Fresnel 11 est disposée transversalement à l'axe optique longitudinal 60 du faisceau laser incident. Le bi-miroir de Fresnel 11 dévie ainsi l'axe optique longitudinal. De manière analogue au bi-prisme de Fresnel 10, le bi-miroir de Fresnel 11 divise le front d'onde du faisceau incident en deux fronts d'onde divisés spatialement, chaque front d'onde divisé étant dévié symétriquement par rapport à l'arête du bi-miroir de Fresnel 11.

Les autres éléments sont configurés pour fonctionner de manière identique aux mêmes éléments décrits plus haut en lien avec la figure 1.

L'avantage du bi-miroir de Fresnel 11 est d'être non dispersif et achromatique. L'utilisation du bi-miroir de Fresnel 11 est particulièrement avantageuse dans le cas d'une impulsion laser ultrabrève 1 de durée inférieure à environ 30 fs. De préférence, l'angle du bi-miroir de Fresnel 11 est disposé symétriquement par rapport à l'axe longitudinal de propagation de l'impulsion incidente.

Dans un mode de réalisation, le bi-miroir de Fresnel est monobloc et l'angle du bi-miroir de Fresnel 11 est fixé par construction. Le bi-miroir de Fresnel 11 a un angle compris de préférence entre 0.5 et 10 degrés. Par exemple, le bi-miroir de Fresnel 11 peut-être constitué de deux miroirs plans collés suivant une arête et formant un angle entre les deux miroirs. Selon une alternative, l'angle du bi-miroir de Fresnel 11 est réglable, de préférence symétriquement, ce qui permet d'ajuster la résolution du système de mesure en fonction de la durée de l'impulsion à mesurer. De façon avantageuse dans ce cas, un système opto-mécanique est configuré de manière à produire une rotation symétrique des deux demi-miroirs autour de l'axe du bi-miroir. Dans le cas où l'angle du bi-miroir de Fresnel 11 est réglable, une procédure de calibration automatisée permet d'ajuster les résultats de sortie en fonction de cet angle.

Un système de mesure, tel qu'illustré sur les figures 1 et 2, basé sur un bi-prisme ou sur un bi-miroir de Fresnel, est facilement intégrable sous vide, ce qui est un avantage certain pour les impulsions ultracourtes (<15 fs) dont la dispersion dans l'air suffit à dégrader les propriétés temporelles de l'impulsion.

La figure 3 représente schématiquement un système de mesure de la durée et la phase d'une impulsion laser basé sur un autocorrélateur monocoup combiné à un spectromètre imageur.

Ce système comporte un premier iris 2, un second iris 3, un bi-miroir de Fresnel 11 et un cristal optique non linéaire 20. Le fonctionnement de ce système est analogue à celui en lien avec la figure 2 jusqu'au cristal optique non linéaire 20. Le détecteur d'image 30 de la figure 2 est ici remplacé par un mini-spectromètre imageur (MSI). Plus précisément, le système de la figure 3 comprend un miroir 25, une lentille 26, un diaphragme 23 de sélection. Le spectromètre imageur 50 comprend une fente d'entrée 51, une lentille 52, un réseau de diffraction 53 en transmission, une autre lentille 54, un détecteur d'image 35 et un connecteur 45 relié à un ordinateur de traitement du signal.

On utilise par exemple des lentilles 52, 54 de diamètre 12 mm, de focale 20~50 mm, peu chromatiques ou achromatiques. Le matériau des lentilles 52, 54 est par exemple du fluorure de calcium ou fluorure de Magnésium ou fluorure de barium dont l'indice de réfraction varie lentement en fonction de la longueur d'onde. De façon avantageuse, le détecteur d'image 35 est constitué d'une caméra. A titre d'exemple, on utilise une caméra CCD ou CMOS ayant 1,5 Mpixels, fonctionnant à une fréquence de 10 à plusieurs centaines d'images/seconde. La caméra est adaptée en fonction de la gamme spectrale de l'impulsion à mesurer. La caméra peut être une caméra UV, visible et/ou infrarouge.

Le miroir 25 sert à replier le chemin optique et à réduire l'encombrement du système. La lentille 26 forme l'image du cristal optique non-linéaire 20 sur la fente d'entrée 51 du spectromètre imageur 50. La fente d'entrée 51 est de préférence de forme rectangulaire. La longueur de la fente d'entrée 51 est disposée perpendiculairement à l'image de la trace d'autocorrélation sur cette fente et donc perpendiculairement à l'arête du bi-miroir. Par exemple, la fente a une largeur de 10 à 50 microns. Ainsi, la fente d'entrée sélectionne spatialement une zone de la trace d'autocorrélation d'ordre 2. La fente 51 est située au foyer de la lentille 52 qui forme ainsi un faisceau collimaté dirigé vers le réseau de diffraction 53. Le réseau de diffraction 53 disperse spectralement la trace d'autocorrélation sur le détecteur d'image 35 résolu spatialement suivant deux dimensions. La deuxième lentille 54 forme l'image de la fente 51 sur le détecteur 35. Le mini-spectromètre imageur 50 forme l'image de la fente d'entrée dispersée spectralement. On obtient ainsi une trace de type FROG (pour frequency-resolved optical gating) qui représente un spectrogramme ayant une dimension spectrale et une dimension temporelle.

Lorsque l'iris 23 ne laisse passer que le faisceau central correspondant à la trace d'autocorrélation, on détecte sur le détecteur d'image 35 une trace d'autocorrélation intensimétrique d'ordre 2 résolue spectralement ou trace FROG intensimétrique d'ordre 2.

Dans le cas où le diaphragme 23 laisse passer le faisceau central et au moins un des deux faisceaux latéraux, on obtient une trace d'autocorrélation interférométrique résolue spectralement ou ou trace FROG interférométrique d'ordre 2.

En modifiant simplement l'ouverture de l'iris 23, on effectue ainsi séquentiellement une mesure de trace d'autocorrélation monocoup en mode interférométrique résolue spectralement et une mesure de trace d'autocorrélation monocoup en mode intensimétrique résolue spectralement.

Une application de ce système de mesure est la mesure de la durée et de la phase d'une impulsion.

Le système de traitement du signal permet de déterminer le profil spectral, temporel et la phase de l'impulsion ultrabrève 1 via un algorithme itératif du type PCGPA (Principal Component Generalized Projections Algorithm, D. Kane, in IEEE J. Quant. Elec. 35, p.421 (1999)) ou via une autre méthode de calcul de la phase à partir de la trace frog interferométrique (G. Stibenz and G. Steinmeyer, "Interferometric frequency-resolved optical gating", Opt. Express 13 (7), 2617 (2005)).

Les mêmes éléments sont représentés sur les figures 3, 4 et 5 par les mêmes signes de référence.

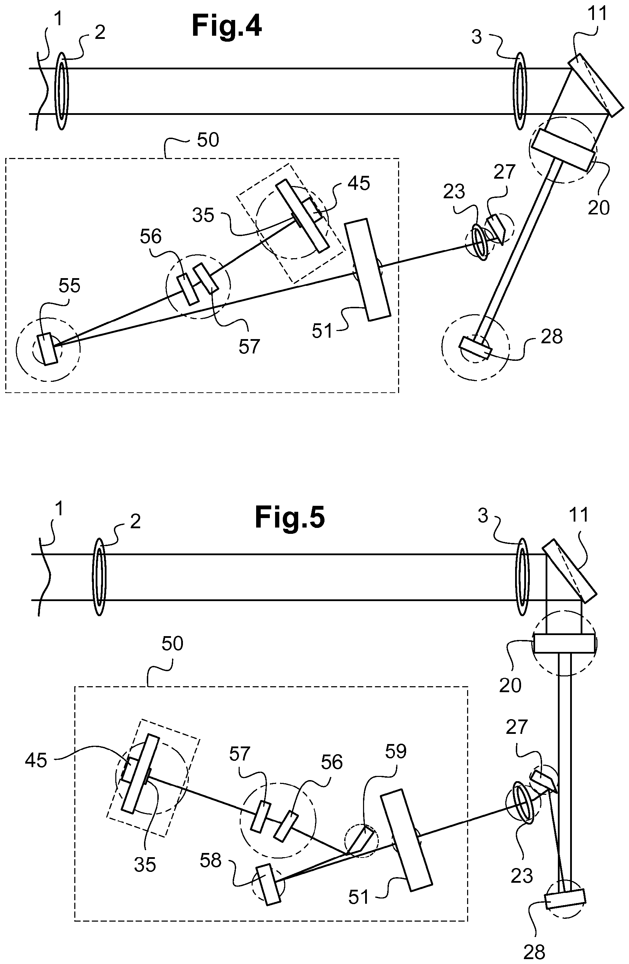

La figure 4 représente schématiquement une première variante du deuxième mode de réalisation. Dans cette variante, on a remplacé la lentille 26 par un système optique à miroirs 27, 28 qui forme une image du cristal optique non-linéaire 20 sur la fente d'entrée 51 du spectromètre imageur 50. Le réseau de diffraction 56 est ici un réseau en transmission. Une autre lentille 57 forme l'image de la trace FROG sur le détecteur 35. De plus, dans ce spectromètre imageur 50, on a remplacé la lentille 52 par un miroir sphérique 55, la fente d'entrée étant placée au foyer de ce miroir sphérique 55. Le système optique constitué par le miroir sphérique 27 et le miroir d'extraction 28 (pick-off mirror) permet de diriger le faisceau sous une incidence proche de zéro degré sur le(s) miroir(s) sphérique(s) 55 et ainsi de réduire fortement les aberrations optiques géométriques, telles que l'astigmatisme. La figure 4 représente ainsi un système de mesure de la phase et de la durée d'une impulsion comprenant un autocorrélateur interférométrique monocoup combiné à un spectromètre imageur, ce système de mesure étant corrigé des aberrations optiques géométriques et essentiellement achromatique jusqu'au réseau de diffraction 56.

La figure 5 représente schématiquement une deuxième variante du deuxième mode de réalisation. Dans cette variante, on a remplacé le miroir sphérique 55 de la figure 3 par un système de miroirs 58, 59. Le miroir 58 est un miroir de focalisation. Le miroir 59 est un miroir d'extraction (pick-off mirror) qui permet de diriger le faisceau sous une faible incidence afin de limiter les aberrations optiques géométriques. Le système de la figure 5 a l'avantage d'être à la fois achromatique et peu encombrant grâce à l'utilisation de miroirs d'extraction (ou pick-off mirror) 27, 59. Cette configuration rend le système particulièrement compact.

Sur les figures 3, 4 et/ou 5 le système présente les spécificités suivantes :

- l'utilisation de deux iris très éloignés l'un de l'autre, le premier iris 2 étant disposé à l'entrée du système et le deuxième iris de sélection 23 étant disposé devant le détecteur, permet de définir un axe optique précis et de faciliter l'alignement du système complet ;
- l'utilisation d'un bi-miroir permet que les deux demi-faisceaux soient automatiquement alignés et synchronisés ;
- le spectromètre imageur avec réseau en transmission est compact ;
- le dimensionnement spécifique des diamètres de faisceau minimum en fonction des impulsions permet de réduire les focales (f<50 mm) tout en évitant les aberrations, d'où une achromaticité et aussi une compacité optimisées. Tous les faisceaux sont dans le même plan et tous les composants optiques sont utilisés à leur optimum dans les conditions de Gauss.

De plus, dans tous les dispositifs des figures 3, 4 et 5, le dernier élément optique d'imagerie, devant le détecteur, est toujours une lentille. Néanmoins, la chromaticité de cette lentille est compensée par un tilt du détecteur permettant d'intercepter des profondeurs d'imagerie différentes en fonction de la position.

La figure 6 représente schématiquement un mode de réalisation particulier de l'invention basé sur un autocorrélateur interférométrique et intensimétrique mesurant simultanément l'ordre un et l'ordre deux. Le système de la figure 6 comporte un premier iris 2, un bi-prisme de Fresnel 10, un cristal optique non-linéaire 20, une lentille 22, un filtre spatial 24, un filtre spectral 21 et un détecteur d'image 30 résolu spatialement suivant deux directions, de type caméra CCD par exemple ayant une résolution interférométrique. La lentille 22 forme l'image des trois faisceaux se propageant respectivement suivant la première direction, la seconde direction et suivant la bissectrice de la première et de la seconde direction. Un filtre spatial 24 est disposé au voisinage du plan de focalisation de la lentille 22. Ce filtre spatial comporte une première zone 241 ouverte et une deuxième zone 242 comportant deux obturateurs 243, 244. La première zone et la seconde zone sont disposées de manière à être simultanément sur le trajet optique des trois faisceaux. Ainsi le faisceau central correspondant à la trace d'autocorrélation intensimétrique n'est pas bloqué alors que les deux faisceaux latéraux sont à demi bloqués afin qu'ils ne s'étendent que sur la moitié du détecteur, de façon à ce que seule la partie supérieure du détecteur reçoive des autocorrélations interférométriques alors que la partie inférieure du détecteur recoit une autocorrélation intensimétrique d'ordre 2.

De façon particulièrement avantageuse, cette seconde zone de filtrage introduit également une densité optique afin d'atténuer le signal à ω pour qu'il soit comparable en intensité avec le signal à 2ω de le première zone de détection afin que les signaux de la première zone et de la seconde zone puisse être détectés simultanément sans endommager ou saturer le détecteur. Un exemple de configuration est illustré dans l'insert 31 qui représente une vue dans le plan du filtre 24. Dans cet exemple, la première zone 241 est disposée de manière à laisser passer les trois demi-faisceaux 310, 311, 312 en direction d'une première région de détection du détecteur 30 et la deuxième zone 242 est disposée de manière à laisser passer uniquement le demi-faisceau central 310 les obturateurs 243 et 244 bloquant les demi-faisceaux latéraux 311, 312 en direction d'une première région de détection du détecteur 30. Ainsi, la combinaison de la première zone 241 du filtre spatial 24 et de la première région du détecteur permet de détecter une trace d'autocorrélation interférométrique à trois faisceaux. Plus particulièrement, dans ce mode de réalisation, le filtre spectral 21 est disposé devant le détecteur 30. De manière avantageuse, le filtre spectral 21 comporte deux zones de filtrage spectral 211, 212. Une première zone 211 filtre le signal à la fréquence fondamentale (ω) et une seconde zone 212 filtre le signal à la fréquence double (2ω). Préférentiellement, la zone 211 comporte une densité optique neutre (OD de 3 à 6) pour compenser la différence d'intensité entre le faisceau à la fréquence double et le faisceau à la fréquence fondamentale. Avantageusement, la première zone de filtrage spectral 211 correspond à 25% de la surface du filtre spectral 21 et la deuxième zone de filtrage spectral 212 correspond à 75% de la surface du filtre spectral 21. Lorsque le filtre spectral utilisé pour bloquer la fréquence fondamentale (ω) est un filtre dichroïque, la puissance moyenne du faisceau incident peut atteindre près de 10 W. D'autre part, on a aussi mesuré des impulsions 0,3 nJ à 60 MHz, soit 20 mW de puissance moyenne, correspondait à une intensité d'environ $10^4$ W/cm$^2$.

De préférence, la première zone 211 et une partie de la deuxième zone 212 sont disposées entre le filtre spatial 24 et la première région du détecteur, de manière à permettre de séparer spatialement sur le détecteur d'une part, une trace d'autocorrélation interférométrique d'ordre un dans une première zone de détection du détecteur, et d'autre part, une trace d'autocorrélation interférométrique d'ordre deux dans une deuxième zone de détection du détecteur. L'autre partie de la deuxième zone 212 du filtre spectral à la fréquence double est disposées entre le filtre spatial 24 et la deuxième région du détecteur, de manière à former une trace d'autocorrélation intensimétrique d'ordre deux dans la deuxième région du détecteur. Au total, dans ce 1er exemple, la combinaison du filtre spatial 24, du filtre spectral bi-zone 21 et du détecteur d'image 30 permet de mesurer simultanément et en monocoup : la trace d'autocorrélation intensimétrique d'ordre deux (SI), la trace d'autocorrélation interférométrique à trois faisceaux d'ordre deux ($S_{interf}(2\omega)$) et la trace d'autocorrélation interférométrique à trois faisceaux d'ordre un ($S_{interf}(\omega)$).

Un traitement de ces mesures d'autocorrélation intensimétrique et interférométrique d'ordre un et d'ordre deux permet d'extraire une mesure de la durée et de la phase de l'impulsion 1 directement à partir des autocorrélations avec un traitement des signaux adapté et du spectre fondamental obtenu à partir de l'autocorrélation d'ordre 1. Cela constitue donc une alternative avantageuse aux méthodes FROG antérieures qui nécessitent plus de complexité et un algorithme itératif lourd pour calculer la phase et le profil temporel.

La figure 7 représente schématiquement un autre mode de réalisation particulier de l'invention basé sur un autocorrélateur interférométrique. Les mêmes signes de référence désignent les mêmes éléments que sur la figure 6. A la différence du système représenté sur la figure 6, le système de la figure 7 ne comporte pas de filtre spatial mais uniquement un filtre spectral 21 bi-zone. Le filtre 21 comporte une première zone de filtrage spectral 211 filtrant le signal à la fréquence fondamentale ($\omega$) et une seconde zone de filtrage spectral 212 filtrant le signal à la fréquence double ($2\omega$). A titre d'exemple, la première zone de filtrage spectral 211 correspond à 50% de la surface du filtre spectral 21 et la deuxième zone de filtrage spectral 212 correspond à 50% de la surface du filtre spectral 21.

Dans cette variante, on mesure simultanément et en monocoup : la trace d'autocorrélation interférométrique à deux faisceaux d'ordre un ($S_{interf}(\omega)$) (car le faisceau central est seulement à la fréquence double) et la trace d'autocorrélation interférométrique à trois faisceaux d'ordre deux ($S_{interf}(2\omega)$) sur un seul et même détecteur résolu spatialement suivant 2 dimensions. Un traitement de ces deux mesures d'autocorrélation interférométriques d'ordre un et d'ordre deux permet d'extraire une mesure de la durée et de la phase du front d'onde 1 de l'impulsion laser en monocoup.

Le système de traitement du signal calcule le spectre de l'impulsion ultrabrève 1, par application d'une opération de transformée de Fourier sur la mesure de la trace d'autocorrélation d'ordre 1.

Un ordinateur connecté à la caméra 30 traite les différentes mesures d'autocorrélation interférométriques et/ou intensimétriques d'ordre un et d'ordre deux. Les données d'entrée sont le spectre (ou la trace d'autocorrélation d'ordre un), et la trace d'autocorrélation interférométrique d'ordre 2 (figure 7) d'une part, ou la trace d'autocorrélation intensimétrique d'ordre 2, le spectre (ou la trace d'autocorrélation d'ordre un), et la trace d'autocorrélation interférométrique d'ordre 2 (figure 6) d'autre part. La sortie du logiciel de traitement comprend l'affichage de ces entrées et le calcul de la phase spectrale et du profil temporel en intensité et en phase.

Dans un autre mode de réalisation, le spectre de l'impulsion peut être importé sous forme de données enregistrées depuis un dispositif séparé de type spectromètre pour permettre la reconstruction du profil temporel.

De façon alternative, comme illustré sur la figure 8, un mini spectromètre peut être intégré au système de mesure afin de recueillir le spectre en temps réel. Le mini spectromètre est intégré au dispositif après le biprisme pour collecter le spectre de l'impulsion ultrabrève par diffusion sur les composants optiques ou au moyen d'une fibre 71 de prélèvement positionnée pour intercepter une partie de faisceau qui n'intervient pas par la suite dans l'autocorrélation.

Selon une autre alternative, la trace d'autocorrélation d'ordre 1 est utilisée pour calculer par transformée de Fourier le spectre fondamental. Dans ce dernier mode de réalisation, un filtre spectral à deux zones spectrales 21 et 21 bis est utilisé afin de filtrer le fondamental sur une partie du détecteur et le faisceau doublé sur une autre partie du détecteur (voir Figures 6-7).

Le système de mesure met à profit la résolution spatiale du détecteur d'image pour permettre de mesurer simultanément, par exemple les signaux d'autocorrélation d'ordre 1 et d'ordre 2. Par conséquent, les informations relatives au spectre et à l'autocorrélation interférométrique peuvent être extraites à partir d'une même image acquise à partir d'une impulsion laser ultrabrève. Ainsi, le dispositif de mesure monocoup permet de reconstruire le profil temporel d'une impulsion laser ultrabrève.

La fabrication et l'utilisation de ce système de mesure de durée et de phase sont relativement simples, par comparaison aux systèmes de l'art antérieur qui sont en général complexes et difficiles d'utilisation.

Le système est facilement configurable pour fournir soit la mesure de durée et de phase, soit une mesure de durée uniquement.

Dans un autre exemple de réalisation, le détecteur d'image 30 est par exemple une barrette de photodiodes résolue spatialement suivant une direction X transverse à l'axe optique longitudinal 60. La barrette de photodiodes est orientée de manière à ce qu'elle s'étende dans une direction transverse à l'arête du bi-prisme de Fresnel 10. Dans ce mode de réalisation, le détecteur n'étant pas résolu spatialement dans la direction parallèle à l'arête du bi-prisme de Fresnel 10, on ne peut pas mesurer simultanément sur le détecteur d'image une trace d'autocorrélation d'ordre 1 et d'ordre 2.

La calibration initiale du détecteur d'image dépend essentiellement du grandissement de la lentille, de la résolution du détecteur et de l'angle entre les deux faisceaux déterminé par l'angle du bi-prisme. Le système de mesure ne requiert donc aucune calibration de la part de l'utilisateur, le réglage effectué en usine étant valable pour toute la durée de vie de l'appareil. L'interfrange du faisceau interférométrique d'autocorrélation d'ordre 2 correspond à une longueur d'onde, à la fréquence optique $2\omega$ soit 2 fs à 400 nm. Un autre bénéfice de la simplicité du système est qu'il ne nécessite aucun réglage, ce qui permet d'avoir des mesures reproductibles quel que soit l'utilisateur. De plus, ce système de mesure est compact et facile d'utilisation. L'implémentation de ce système de mesure sur une ligne laser peut être effectuée en quelques minutes, alors que l'alignement d'un autocorrélateur classique ou d'un dispositif de mesure de phase peut prendre plusieurs heures, voire plus.

La compacité du système de mesure de durée et de phase permet de l'intégrer facilement dans un laser pour des applications OEM.

La figure 8 représente un système de mesure selon un autre mode de réalisation comprenant un autocorrélateur d'ordre deux combiné à un spectromètre. Les mêmes signes de référence désignent les mêmes éléments que sur la figure 6 ou 7. Dans ce mode de réalisation, on utilise un spectromètre 70 par exemple couplé via une fibre optique 71 pour enregistrer l'intensité I($\lambda$) de l'impulsion 1 en fonction de la longueur d'onde, autrement dit le spectre de l'impulsion lumineuse 1.

Un filtre spectral 21 est disposé entre le cristal optique non-linéaire 20 et la lentille 22 de focalisation. Le filtre spectral 21 laisse passer uniquement les signaux à la fréquence optique double ($2\omega$). En option, un filtre spatial 29 peut être disposé dans le plan focal de la lentille 22. Ce filtre spatial 29 permet en particulier de supprimer la diffraction parasite sur l'arête du bi-prisme.

Un premier exemple de configuration du filtre spatial 24, illustrée dans l'insert 31, est similaire au mode de réalisation décrit en lien avec la figure 6. Au total, dans ce 1er exemple de la figure 8, la combinaison du filtre spectral 21, du filtre spatial 24 et du détecteur d'image 30 permet de mesurer simultanément et en monocoup : une trace d'autocorrélation intensimétrique d'ordre 2 et une trace d'autocorrélation interférométrique à trois faisceaux d'ordre deux.

Un deuxième exemple de configuration est illustré dans l'insert 32 qui représente une vue dans le plan du filtre 24. Dans ce 2ème exemple, la première zone 241 est disposée de manière à laisser passer deux demi-faisceaux 310, 311 en direction d'une première région de détection du détecteur 30 l'obturateur 244 bloquant le demi-faisceau 312. Ainsi, la combinaison de la première zone 241 du filtre spatial 24 et de la première région du détecteur permet de détecter une trace d'autocorrélation interférométrique à deux faisceaux. Comme dans le 1er exemple, la deuxième zone 242 est disposée de manière à laisser passer uniquement le demi-faisceau central 310 en direction d'une première région de détection du détecteur 30 les obturateurs 243 et 244 bloquant les demi-faisceaux latéraux 311, 312. Au total, dans ce 2nd exemple, la combinaison du filtre spectral 21, du filtre spatial 24 et du détecteur d'image 30 permet de mesurer simultanément et en monocoup : la trace d'autocorrélation intensimétrique d'ordre deux (SI), la trace d'autocorrélation interférométrique à deux faisceaux d'ordre deux ($S_{interf}(2\omega)$).

Un ordinateur collecte et effectue le traitement du spectre mesuré (I($\lambda$)) et des signaux d'autocorrélation intensimétrique et interférométrique d'ordre deux (($S.I(2\omega)$, $S_{interf}(2\omega)$). Le traitement de ces signaux permet d'extraire une mesure de la durée ou du profil d'intensité et de la phase du front d'onde 1 de l'impulsion laser d'entrée.

Dans les modes de réalisation décrits en lien avec les figures 3, 4 et 5 (méthode FROG), le spectre fondamental peut être détecté soit de manière séquentielle en utilisant le second ordre de diffraction du réseau, soit de manière simultanée en utilisant un détecteur de plus grande dimension spatiale et une densité optique adaptée ou un second détecteur. La connaissance du spectre fondamental permet de donner un critère de convergence pour l'algorithme FROG et donc d'améliorer la qualité des mesures.

Dans les modes de réalisation correspondant aux figures 1 à 5, une lentille cylindrique peut être placée en amont du système afin de permettre des mesures à très faible énergie. Dans ce cas la lentille cylindrique doit être parfaitement alignée et le foyer postionné sur le cristal non linéaire afin de produire une mesure fiable.

Dans tous les modes de réalisation, un système optique afocal dispersif ou non dispersif peut être placé en amont du dispositif afin de grossir le faisceau lorsque sa taille n'est pas suffisante pour la durée d'impulsion à mesurer.

## Revendications

1. Système de mesure de durée, de profil temporel et de spectre d'impulsion laser ultrabrève, le système de mesure comportant un autocorrélateur optique monocoup comprenant :

    - un composant optique à division de front d'onde (10, 11) disposé pour recevoir un front d'onde collimaté (1) de fréquence optique fondamentale ($\omega$) provenant d'une source d'impulsion laser ultrabrève et pour diviser spatialement le front d'onde collimaté (1) d'une impulsion lumineuse ultrabrève en un premier front d'onde divisé se propageant suivant une première direction et en un second front d'onde divisé se propageant suivant une seconde direction formant un angle non nul avec la première direction, le composant optique à division de front d'onde comportant un bi-prisme de Fresnel ou un bi-miroir de Fresnel,
    - un cristal optique non linéaire (20) disposé à une distance déterminée du composant optique à division de front d'onde (10, 11) de manière à ce que le premier front d'onde divisé et le second front d'onde divisé se superposent dans le cristal optique non linéaire (20),
    - un système optique (22, 25, 26, 27, 28) formant une image du cristal optique non-linéaire sur un système de détection (30, 50) résolu spatialement suivant au moins une direction ;
- un dispositif de filtrage (21, 23, 24) disposé entre le cristal optique non linéaire (20) et le système de détection (30, 50), le dispositif de filtrage (21, 23, 24) et le système de détection (30) étant configurés pour détecter simultanément, d'une part, une trace d'autocorrélation interférométrique ou intensimétrique monocoup d'ordre deux à la fréquence optique double (2ω) et, d'autre part, au moins une autre trace d'autocorrélation monocoup de type interférométrique d'ordre un à la fréquence optique fondamentale (ω), et en ce que
- le système de mesure comporte un système de traitement du signal configuré pour analyser, d'une part, la trace d'autocorrélation interférométrique ou intensimétrique monocoup d'ordre deux à la fréquence optique double (2ω), et, d'autre part, l'autre trace d'autocorrélation monocoup de type interférométrique d'ordre un à la fréquence optique fondamentale (ω), et pour en déduire une mesure de durée, de profil temporel et de spectre d'impulsion laser ultrabrève (1).

2. Système de mesure de durée, de profil temporel et de spectre d'impulsion laser ultrabrève selon la revendication 1 dans lequel le bi-prisme de Fresnel ou bi-miroir de Fresnel a un angle au sommet fixe ou ajustable symétriquement.

3. Système de mesure de durée, de profil temporel et de spectre d'impulsion laser ultrabrève selon la revendication 2 dans lequel la distance D entre le composant optique à division de front d'onde et le cristal optique non-linéaire est comprise entre: 0.1*delta et 0.5*delta,

où delta est égal à $\frac{\phi}{2 \times \tan(\alpha/2)}$ et où Φ représente le diamètre d'entrée du dispositif et où α est égal à (180 - A)·(n-1) où A représente l'angle au sommet ou apex du bi-prisme de Fresnel et n l'indice de réfraction du matériau du prisme ou, respectivement, α est égal à 2*(180-A) pour un bi-miroir de Fresnel, où A représente l'apex d'un bi-prisme complémentaire au bi-miroir.

4. Système de mesure de durée, de profil temporel et de spectre d'impulsion laser ultrabrève selon les revendications 2 et 3 comportant une pluralité de bi-prismes de Fresnel ayant chacun un angle au sommet déterminé et comprenant en outre un système de commutation adapté pour sélectionner un bi-prisme de Fresnel parmi la pluralité de bi-prismes de Fresnel et pour disposer le bi-prisme sélectionné à une distance D du cristal optique non linéaire (20) telle que définie à la revendication 3.

5. Système de mesure de durée, de profil temporel et de spectre d'impulsion laser ultrabrève selon l'une des revendications 1 à 4 dans lequel le cristal optique non linéaire (20) a une épaisseur supérieure ou égale à 5 microns et un accord de phase adaptés pour permettre un doublage de fréquence optique dans une gamme spectrale comprise entre 0.4 à 12 micromètres.

6. Système de mesure de durée, de profil temporel et de spectre d'impulsion laser ultrabrève selon l'une des revendications 1 à 5 dans lequel le dispositif de filtrage (21, 23, 24) comporte un filtre spatial commutable en ouverture entre une première et une seconde ouverture, la première ouverture étant configurée pour faire passer vers le système de détection d'une part la direction de propagation de la bissectrice de la première et de la seconde directions et d'autre part la première direction et/ou la seconde direction, de manière à former la trace d'autocorrélation interférométrique monocoup d'ordre deux, et respectivement la seconde ouverture étant configurée pour faire passer vers le système de détection sélectivement l'axe de propagation suivant la bissectrice de la première et de la seconde directions tout en bloquant les première et seconde directions pour former l'autre trace d'autocorrélation monocoup de type intensimétrique d'ordre deux.

7. Système de mesure de durée, de profil temporel et de spectre d'impulsion laser ultrabrève selon l'une des revendications 1 à 6 dans lequel le dispositif de filtrage (21, 23, 24) comporte un filtre spectral (21) configuré pour filtrer sélectivement la fréquence optique double (2ω) et pour bloquer la fréquence optique fondamentale (ω).

8. Système de mesure de durée, de profil temporel et de spectre d'impulsion laser ultrabrève selon l'une des revendications 1 à 6 dans lequel le système de détection comporte une caméra (30) comprenant une première et une deuxième zones de détection résolues spatialement et dans lequel le dispositif de filtrage (21, 23, 24) comporte un filtre spectral (21) ayant une première et une deuxième zones de filtrage spectral, la première zone de filtrage spectral étant configurée pour faire passer sélectivement la fréquence optique double (2ω) vers la première zone de détection tout en bloquant la fréquence optique fondamentale (ω), et la deuxième zone de filtrage spectral étant configurée pour faire passer sélectivement la fréquence optique fondamentale (ω) vers la deuxième zone de détection tout en bloquant la fréquence optique double (2ω).

9. Système de mesure de durée, de profil temporel et de spectre d'impulsion laser ultrabrève selon l'une des revendications 1 à 8 dans lequel le système de détection comporte une caméra (30) comprenant une première et une deuxième régions de détection résolues spatialement et dans lequel le dispositif de filtrage comporte un filtre spatial (24) ayant au moins une première zone de filtrage spatial et une deuxième zone de filtrage spatial, la première zone de filtrage spatial étant configurée pour faire passer, d'une part, la direction de propagation de la bissectrice de la première et de la seconde directions et, d'autre part, la première et/ou la seconde direction, vers la première région de détection, de manière à former la trace d'autocorrélation interférométrique monocoup d'ordre deux, et respectivement la deuxième zone de filtrage spatial étant configurée pour faire passer sélectivement la direction de propagation suivant la bissectrice de la première et de la seconde directions tout en bloquant les première et seconde directions vers la deuxième région de détection, pour former l'autre trace d'autocorrélation monocoup de type intensimétrique d'ordre deux.

10. Système de mesure de durée, de profil temporel et de spectre d'impulsion laser ultrabrève selon l'une des revendications 1 à 9 comprenant en outre un spectromètre (70) configuré pour enregistrer un spectre de l'impulsion lumineuse, et dans lequel le système de traitement du signal est configuré pour en déduire une mesure de la phase de l'impulsion lumineuse.

11. Système de mesure de durée, de profil temporel et de spectre d'impulsion laser ultrabrève selon l'une des revendications 1 à 7 dans lequel le système de détection comporte un spectromètre imageur (50) ayant une fente d'entrée (51), un système optique spectralement dispersif (53, 56) et un détecteur (35) résolu spatialement suivant deux directions, le dispositif de filtrage (21, 23, 24) et le spectromètre imageur étant configurés pour détecter, d'une part, une trace d'autocorrélation intensimétrique monocoup d'ordre deux résolue spectralement et, d'autre part, une trace d'autocorrélation interférométrique monocoup résolue spectralement.

12. Système de mesure de durée, de profil temporel et de spectre d'impulsion laser ultrabrève selon la revendication 11 dans lequel le système optique spectralement dispersif (53, 56) comprend un réseau de diffraction en transmission ou en réflexion.

13. Système de mesure de durée, de profil temporel et de spectre d'impulsion laser ultrabrève selon la revendication 11 ou 12 dans lequel le système optique (22, 25, 26, 27, 28) formant l'image du cristal optique non-linéaire sur la fente d'entrée du spectromètre imageur (50) comporte un système optique achromatique comprenant un premier miroir sphérique (28) éclairé sous un angle d'incidence inférieur à 4

degrés, et un second miroir (27) configuré pour séparer un faisceau optique réfléchi d'un faisceau optique incident sur le premier miroir sphérique.

14. Système de mesure de durée, de profil temporel et de spectre d'impulsion laser ultrabrève selon l'une des revendications 11 à 13 dans lequel le spectromètre imageur (50) comporte un autre système optique achromatique à miroirs (58, 59) configuré pour former une image de la fente d'entrée (51) sur le détecteur (35), l'autre système optique achromatique à miroirs (58, 59) comprenant un miroir sphérique (58) éclairé sous un angle d'incidence inférieur à 3 degrés, et un autre miroir (59) configuré pour séparer un faisceau optique réfléchi d'un faisceau optique incident sur ledit miroir sphérique (58).

15. Système de mesure de durée, de profil temporel et de spectre d'impulsion laser ultrabrève selon l'une des revendications 1 à 14 comportant en outre un diaphragme d'alignement optique (2) adjacent au composant optique à division de front d'onde (10, 11), le diaphragme d'alignement étant positionné à la verticale du premier pied du dispositif formant ainsi un point de pivot pour l'alignement du dispositif sur l'axe optique.

**Patentansprüche**

1. System zur Messung der Dauer, des zeitlichen Profils und Spektrums eines ultraschnellen Laserpulses, wobei das Meßsystem einen optischen Einmal-Autokorrelator aufweist, der

- ein optisches Bauelement mit Wellenfrontteilung (10, 11), das zum Empfangen einer kollimierten Wellenfront (1) der optischen Grundfrequenz ($\omega$), die von einer Quelle ultraschneller Laserpulse kommt, und zum räumlichen Trennen der kollimierten Wellenfront (1) eines ultraschnellen Laserpulses in eine sich in einer ersten Richtung ausbreitende erste geteilte Wellenfront und eine sich in einer zweiten Richtung, die mit der ersten Richtung einen von Null verschiedenen Winkel bildet, ausbreitende zweite geteilte Wellenfront ausgelegt ist, wobei das optische Bauelement mit Wellenfrontteilung ein Fresnel-Doppelprisma oder einen Fresnel-Doppelspiegel aufweist,
- einen nichtlinearen optischen Kristall (20), der in einem bestimmten Abstand vom optischen Bauelement mit Wellenfrontteilung (10, 11) derart angeordnet ist, daß sich die erste geteilte Wellenfront und die zweite geteilte Wellenfront im nichtlinearen optischen Kristall (20) überlagern,
- ein optisches System (22, 25, 26, 27, 28), das auf einem in wenigstens einer Richtung räumlich aufgelösten Erfassungssystem (30, 50) ein Bild des nichtlinearen optischen Kristalls (20) erzeugt,

- eine Filtervorrichtung (21, 23, 24), die zwischen dem nichtlinearen optischen Kristall (20) und dem Erfassungssystem (30, 50) angeordnet ist, wobei die Filtervorrichtung (21, 23, 24) und das Erfassungssystem (30) dazu ausgelegt sind, gleichzeitig einerseits eine Spur einer interferometrischen oder intensimetrischen Einmal-Autokorrelation der Größenordnung zwei bei der doppelten optischen Frequenz (2ω) und andererseits wenigstens eine weitere Spur einer Einmal-Autokorrelation vom interferometrischen Typ der Größenordnung eins bei der optischen Grundfrequenz (ω) zu erfassen, aufweist, und wobei

- das Meßsystem ein Signalverarbeitungssystem aufweist, das dazu ausgelegt ist, einerseits die Spur der intensimetrischen Einmal-Autokorrelation der Größenordnung zwei bei der doppelten optischen Frequenz (2ω) und andererseits die andere Spur der Einmal-Autokorrelation vom interferometrischen Typ der Größenordnung eins bei der optischen Grundfrequenz (ω) zu analysieren und daraus ein Maß für die Dauer, das zeitliche Profil und das Spektrum des ultraschnellen Laserpulses (1) abzuleiten.

2. System zur Messung der Dauer, des zeitlichen Profils und Spektrums eines ultraschnellen Laserpulses gemäß Anspruch 1, bei dem das Fresnel-Doppelprisma oder der Fresnel-Doppelspiegel an der Spitze einen festen oder symmetrisch einstellbaren Winkel aufweist.

3. System zur Messung der Dauer, des zeitlichen Profils und Spektrums eines ultraschnellen Laserpulses gemäß Anspruch 2, bei dem der Abstand D zwischen dem optischen Bauelement mit Wellenfrontteilung und dem nichtlinearen optischen Kristall zwischen 0,1*Delta und 0,5*Delta beträgt, wobei Delta gleich

$$\frac{\Phi}{2 \times \tan(\alpha/2)}$$

ist und wobei Φ den Eingangsdurchmesser der Vorrichtung darstellt und wobei a gleich (180 - A) · (n-1) ist und wobei A den Winkel am obersten Ende oder an der Spitze des Fresnel-Doppelprimas und n den Brechungsindex des Prismenmaterials darstellen, oder wobei α gleich 2*(180-A) für einen Fresnel-Doppelspiegel ist, wobei A die Spitze eines zum Doppelspiegel komplementären Doppelprismas darstellt.

4. System zur Messung der Dauer, des zeitlichen Profils und Spektrums eines ultraschnellen Laserpulses gemäß den Ansprüchen 2 und 3, das eine Mehrzahl Fresnel-Doppelprismen aufweist, von denen jedes einen bestimmten Spitzenwinkel aufweist, und das außerdem ein Umschaltsystem aufweist, das dazu ausgelegt ist, ein Fresnel-Doppelprisma aus der Mehrzahl Fresnel-Doppelprismen auszuwählen und das ausgewählte Doppelprisma in einer im Anspruch 3 definierten Entfernung D vom nichtlinearen optischen Kristall (20) anzuordnen.

5. System zur Messung der Dauer, des zeitlichen Profils und Spektrums eines ultraschnellen Laserpulses gemäß einem der Ansprüche 1 bis 4, bei dem der nichtlineare optische Kristall (20) eine Dicke von größer als oder gleich 5 Mikrometer und eine Phasenabstimmung aufweist, die so ausgelegt sind, daß eine Verdoppelung der optischen Frequenz in einem Spektralbereich zwischen 0,4 und 12 Mikrometer möglich ist.

6. System zur Messung der Dauer, des zeitlichen Profils und Spektrums eines ultraschnellen Laserpulses gemäß einem der Ansprüche 1 bis 5, bei dem die Filtervorrichtung (21, 23, 24) einen Raumfilter aufweist, der hinsichtlich seiner Öffnung zwischen einer ersten und einer zweiten Öffnung schaltbar ist, wobei die erste Öffnung so ausgelegt ist, daß einerseits die Ausbreitungsrichtung der Winkelhalbierenden der ersten und der zweiten Richtung und andererseits die erste Richtung und/oder die zweite Richtung zum Erfassungssystem geführt werden, um die Spur der interferometrischen Einmal-Autokorrelation der Größenordnung zwei zu bilden, und wobei die zweite Öffnung so ausgelegt ist, daß wahlweise die Ausbreitungsachse entlang der Winkelhalbierenden der ersten und der zweiten Richtung zum Erfassungssystem geführt werden kann und gleichzeitig die erste und die zweite Richtung blockiert werden, um die andere Spur der intensimetrischen Einmal-Autokorrelation der Größenordnung zwei zum Erfassungssystem zu führen.

7. System zur Messung der Dauer, des zeitlichen Profils und Spektrums eines ultraschnellen Laserpulses gemäß einem der Ansprüche 1 bis 6, bei dem die Filtervorrichtung (21, 23, 24) einen Spektralfilter (21) aufweist, der dazu ausgelegt ist, selektiv die doppelte optische Frequenz (2ω) zu filtern und die optische Grundfrequenz (ω) zu blockieren.

8. System zur Messung der Dauer, des zeitlichen Profils und Spektrums eines ultraschnellen Laserpulses gemäß einem der Ansprüche 1 bis 6, bei dem das Erfassungssystem eine Kamera (30) mit einer ersten und einer zweiten Erfassungszone, die räumlich aufgelöst sind, aufweist und bei dem die Filtervorrichtung (21, 23, 24) einen Spektralfilter (21) aufweist, der eine erste und eine zweite Spektralfilterzone aufweist, wobei die erste Spektralfilterzone dazu ausgelegt ist, selektiv die doppelte optische Frequenz (2ω) zur ersten Erfassungszone zu führen und dabei die optische Grundfrequenz (ω) zu blockieren, und die zweite Spektralfilterzone dazu ausgelegt ist, selektiv die optische Grundfrequenz (ω) zur zweiten Erfassungszone zu führen und dabei die doppelte optische Frequenz (2ω) zu blockieren.

9. System zur Messung der Dauer, des zeitlichen Profils und Spektrums eines ultraschnellen Laserpulses gemäß einem der Ansprüche 1 bis 8, bei dem das Erfassungssystem eine Kamera (30) mit einer ersten und einer zweiten Erfassungszone, die räumlich aufgelöst sind, aufweist und bei dem die Filtervorrichtung (21, 23, 24) einen Raumfilter (24) aufweist, der wenigstens eine erste Raumfilterzone und eine zweite Raumfilterzone aufweist, wobei die erste Raumfilterzone dazu ausgelegt ist, einerseits die Ausbreitungsrichtung der Winkelhalbierenden der ersten und der zweiten Richtung und andererseits die erste Richtung und/oder die zweite Richtung zur ersten Erfassungszone zu fuhren, um die Spur der interferometrischen Einmal-Autokorrelation der Größenordnung zwei zu bilden, und wobei die zweite Raumfilterzone dazu ausgelegt ist, wahlweise die Ausbreitungsrichtung entlang der Winkelhalbierenden der ersten und der zweiten Richtung zur zweiten Erfassungszone zu führen und gleichzeitig die erste und die zweite Richtung zur zweiten Erfassungszone zu blockieren, um die andere Spur der intensimetrischen Einmal-Autokorrelation der Größenordnung zwei zu bilden.

10. System zur Messung der Dauer, des zeitlichen Profils und Spektrums eines ultraschnellen Laserpulses gemäß einem der Ansprüche 1 bis 9, das außerdem ein Spektrometer (70) aufweist, das dazu ausgelegt ist, ein Lichtimpulsspektrum zu speichern, und bei dem das Signalverarbeitungssystem dazu ausgelegt ist, daraus eine Messung der Lichtimpulsphase abzuleiten.

11. System zur Messung der Dauer, des zeitlichen Profils und Spektrums eines ultraschnellen Laserpulses gemäß einem der Ansprüche 1 bis 7, bei dem das Erfassungssystem ein bildgebendes Spektrometer (50) mit einem Eingangsschlitz (51), einem spektral dispersiven optischen System (53, 56) und einem in zwei Richtungen räumlich aufgelösten Sensor (35) aufweist, wobei die Filtervorrichtung (21, 23, 24) und das bildgebende Spektrometer dazu ausgelegt sind, einerseits eine spektral aufgelöste Spur der intensimetrischen Einmal-Autokorrelation der Größenordnung zwei und andererseits eine spektral aufgelöste Spur der interferometrischen Einmal-Autokorrelation der Größenordnung zwei zu bilden.

12. System zur Messung der Dauer, des zeitlichen Profils und Spektrums eines ultraschnellen Laserpulses gemäß Anspruch 11, bei dem das spektral dispersive optische System (53, 56) ein Transmissions- oder Reflexionsbeugungsgitter aufweist.

13. System zur Messung der Dauer, des zeitlichen Profils und Spektrums eines ultraschnellen Laserpulses gemäß Anspruch 11 oder 12, bei dem das optische System (22, 25, 26, 27, 28), das das Bild des nichtlinearen optischen Kristalls auf dem Eingangsspalt des Bildspektrometers (50) bildet, ein achromatisches optisches System mit einem ersten sphärischen Spiegel (28), der unter einem Einfallswinkel von weniger als 4 Grad beleuchtet wird, und einem zweiten Spiegel (27), der dazu ausgelegt ist, einen reflektierten optischen Strahl von einem auf den ersten sphärischen Spiegel einfallenden Strahl zu trennen, aufweist.

14. System zur Messung der Dauer, des zeitlichen Profils und Spektrums eines ultraschnellen Laserpulses gemäß einem der Ansprüche 11 bis 13, bei dem das bildgebende Spektrometer (50) ein weiteres achromatisches optisches System mit Spiegeln (58, 59) aufweist, das dazu ausgelegt ist, auf dem Sensor (35) ein Bild des Eingangsspalts (51) zu bilden, wobei das weitere achromatische optische System mit Spiegeln (58, 59) einen unter einem Einfallswinkel von weniger als 3 Grad beleuchteten sphärischen Spiegel (58) und einen "weiteren Spiegel, der dazu ausgelegt ist, einen reflektierten optischen Strahl von einem auf den sphärischen Spiegel (58) einfallenden Strahl zu trennen, aufweist.

15. System zur Messung der Dauer, des zeitlichen Profils und Spektrums eines ultraschnellen Laserpulses gemäß einem der Ansprüche 1 bis 14, das außerdem eine optische Ausrichtblende (2) aufweist, die an das optische Bauelement mit Wellenfrontteilung (10, 11) angrenzt, wobei die Äusrichtblende senkrecht über dem ersten Fuß der Vorrichtung angeordnet ist und so einen Drehpunkt für die Ausrichtung der Vorrichtung auf die optische Achse bildet.

**Claims**

1. A system for measuring the duration, the temporal profile and the spectrum of an ultrashort laser pulse, the measurement system including a single-shot optical autocorrelator comprising:

   - a wavefront-splitting optical component (10, 11) arranged so as to receive a collimated wavefront (1) of fundamental optical frequency (ω) coming from an ultrashort laser pulse source and to spatially split the collimated wavefront (1) of an ultrashort light pulse into a first split wavefront propagating along a first direction and a second split wavefront propagating along a second direction forming a non-null angle with the first direction, the wavefront-splitting optical component including a Fresnel bi-prism or a Fresnel bi-mirror,

- a non-linear optical crystal (20) arranged at a determined distance from the wavefront-splitting optical component (10, 11) so that the first split wavefront and the second split wavefront are superimposed to each other in the non-linear optical crystal (20),

- an optical system (22, 25, 26, 27, 28) forming an image of the non-linear optical crystal on a detection system (30, 50) spatially resolved in at least one direction,

- a filtering device (21, 23, 24) arranged between the non-linear optical crystal (20) and the detection system (30, 50), the filtering device (21, 23, 24) and the detection system (30) being configured to detect simultaneously, on the one hand, a second-order single-shot interferometric or intensimetric autocorrelation trace at the double optical frequency $(2\omega)$ and, on the other hand, at least another single-shot autocorrelation trace of the first-order interferometric type at the fundamental optical frequency $(\omega)$, and in that

- the measurement system includes a signal processing system configured to analyse, on the one hand, the second-order single-shot interferometric or intensimetric autocorrelation trace at the double optical frequency $(2\omega)$ and, on the other hand, the other single-shot autocorrelation trace at the fundamental optical frequency $(\omega)$, and to deduce therefrom a measurement of the duration, the temporal profile and the spectrum of an ultrashort laser pulse (1).

2. The system for measuring the duration, the temporal profile and the spectrum of an ultrashort laser pulse according to claim 1, wherein the Fresnel bi-prism or the Fresnel bi-mirror has a fixed or symmetrically adjustable apex angle.

3. The system for measuring the duration, the temporal profile and the spectrum of an ultrashort laser pulse according to claim 2, wherein the distance D between the wavefront-splitting optical component and the non-linear optical crystal is comprised between: 0.1*deita and 0.5*delta, where delta is equal to

$$\frac{\varnothing}{2 \times \tan\left(\alpha/2\right)},$$

and where Ø is the inlet diameter of the device and where $\alpha$ is equal to $(180 - A)\cdot(n - 1)$, where A represents the apex angle or apex of the Fresnel bi-prism and n the refractive index of the prism material or, respectively, $\alpha$ is equal to 2*(180 - A) for a Fresnel bi-mirror, where A represents the apex of a bi-prism complementary of the bi-mirror.

4. The system for measuring the duration, the temporal profile and the spectrum of an ultrashort laser pulse according to claims 2 and 3, including a plurality of Fresnel bi-prisms each having a determined apex angle and further comprising a switching system adapted to select a Fresnel bi-prism among the plurality of Fresnel bi-prisms and to place the selected bi-prism at a distance D from the non-linear optical crystal (20), as defined in claim 3.

5. The system for measuring the duration, the temporal profile and the spectrum of an ultrashort laser pulse according to one of claims 1 to 4, wherein the non-linear optical crystal (20) has a thickness higher than or equal to 5 micrometres and a suitable phase matching to allow an optical frequency doubling in a spectral range comprised between 0.4 and 12 micrometres.

6. The system for measuring the duration, the temporal profile and the spectrum of an ultrashort laser pulse according to one of claims 1 to 5, wherein the filtering device (21, 23, 24) includes a spatial filter able to be switched in opening between a first and a second opening, the first opening being configured to let through to the detection system, on the one hand, the direction of propagation of the bisector of the first and second directions and, on the other hand, the first direction and/or the second direction, so as to form the second-order single-shot interferometric autocorrelation trace, and, respectively, the second opening being configured to selectively let through to the detection system the axis of propagation along the bisector of the first and second directions, while blocking the first and second directions to form the other single-shot autocorrelation trace of the second-order intensimetric type.

7. The system for measuring the duration, the temporal profile and the spectrum of an ultrashort laser pulse according to one of claims 1 to 6, wherein the filtering device (21, 23, 24) includes a spectral filter (21) configured to selectively filter the double optical frequency $(2\omega)$ and to block the fundamental optical frequency $(\omega)$.

8. The system for measuring the duration, the temporal profile and the spectrum of an ultrashort laser pulse according to one of claims 1 to 6, wherein the detection system includes a camera (30) comprising a first and a second spatially-resolved detection zones and wherein the filtering device (21, 23, 24) includes a spectral filter (21) having a first and a second spectral filtering zones, the first spectral filtering zone being configured to selectively let through the double optical frequency ($2\omega$) to the first detection zone while blocking the fundamental optical frequency ($\omega$), and the second spectral filtering zone being configured to selectively let through the fundamental optical frequency ($\omega$) to the second detection zone while blocking the double optical frequency ($2\omega$).

9. The system for measuring the duration, the temporal profile and the spectrum of an ultrashort laser pulse according to one of claims 1 to 8, wherein the detection system includes a camera (30) comprising a first and a second spatially-resolved detection areas and wherein the filtering device includes a spatial filter (24) having at least one first spatial filtering zone and a second spatial filtering zone, the first spatial filtering zone being configured to let through, on the one hand, the direction of propagation of the bisector of the first and second directions and, on the other hand, the first and/or the second direction, to the first detection area, so as to form the second-order single-shot interferometric autocorrelation trace, and respectively, the second spatial filtering zone being configured to selectively let through the direction of propagation along the bisector of the first and the second directions while blocking the first and second directions towards the second detection area, to form the other single-shot autocorrelation trace of the second-order intensimetric type.

10. The system for measuring the duration, the temporal profile and the spectrum of an ultrashort laser pulse according to one of claims 1 to 9, further comprising a spectrometer (70) configured to record a spectrum of the light pulse, and wherein the signal processing system is configured to deduce therefrom a measurement of the light pulse phase.

11. The system for measuring the duration, the temporal profile and the spectrum of an ultrashort laser pulse according to one of claims 1 to 7, wherein the detection system includes an imaging spectrometer (50) having an inlet slot (51), a spectrally-dispersive optical system (53, 56) and a detector (35) spatially resolved in two directions, the filtering device (21, 23, 24) and the imaging spectrometer being configured to detect, on the one hand, a spectrally-resolved second-order single-shot intensimetric autocorrelation trace, and on the other hand, a spectrally-resolved single-shot interferometric autocorrelation trace.

12. The system for measuring the duration, the temporal profile and the spectrum of an ultrashort laser pulse according to claim 11, wherein the spectrally-dispersive optical system (53, 56) comprises a transmission or reflection diffraction grating.

13. The system for measuring the duration, the temporal profile and the spectrum of an ultrashort laser pulse according to claim 11 or 12, wherein the optical system (22, 25, 26, 27, 28) forming the image of the non-linear optical crystal on the inlet slot of the imaging spectrometer (50) includes an achromatic optical system comprising a first spherical mirror (28) illuminated with an incidence angle lower than 4 degrees, and a second mirror (27) configured to separate a reflected optical beam from an incident optical beam on the first spherical mirror.

14. The system for measuring the duration, the temporal profile and the spectrum of an ultrashort laser pulse according to one of claims 11 to 13, wherein the imaging spectrometer (50) includes another mirror-based achromatic optical system (58, 59) configured to form an image of the inlet slot (51) on the detector (35), the other mirror-based achromatic optical system (58, 59) comprising a spherical mirror (58) illuminated with an incidence angle lower than 3 degrees, and another mirror (59) configured to separate a reflected optical beam from an incident optical beam on said spherical mirror (58).

15. The system for measuring the duration, the temporal profile and the spectrum of an ultrashort laser pulse according to one of claims 1 to 14, further including an optical alignment diaphragm (2) adjacent to the wavefront-splitting optical component (10, 11), the alignment diaphragm being positioned vertically above the first foot of the device, hence forming a pivot point for the alignment of the device to the optical axis.

Fig.1

Fig.2

Fig.3

# Fig.4

# Fig.5

# Fig.6

# Fig.7

# Fig.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20020180977 A1

**Littérature non-brevet citée dans la description**

- **DIELS et al.** Control and measurement of amplitude of ultrashort pulse shapes -in amplitude and phase- with femtosecond accuracy. *Appl. Optics,* 1985, vol. 24 (9), 1270-1282
- **F. SALIN et al.** Autocorrélation interférométrique monocoup d'impulsions femtosecondes. *Revue Phys. Appl.,* 1987, vol. 22, 1613-1618
- **D. KANE.** Principal Component Generalized Projections Algorithm. *IEEE J. Quant. Elec.,* 1999, vol. 35, 421
- **G. STIBENZ ; G. STEINMEYER.** Interferometric frequency-resolved optical gating. *Opt. Express,* 2005, vol. 13 (7), 2617